# EUROPÄISCHE PATENTSCHRIFT

(11) **EP 2 411 176 B1**
(45) Veröffentlichungstag und Bekanntmachung des Hinweises auf die Patenterteilung: **28.01.2015**
(21) Anmeldenummer: 10717495.5
(22) Anmeldetag: 15.03.2010
(51) Int. Cl.: B23D 63/00, B23D 63/16

(54) **SCHÄRFVORRICHTUNG FÜR MOTORSÄGEKETTEN**
SHARPENING DEVICE FOR POWER SAW CHAINS
DISPOSITIF D'AFFÛTAGE POUR CHAÎNES DE TRONÇONNEUSES

(30) Priorität: 25.03.2009 DE 102009014231; 13.05.2009 DE 102009021183
(43) Veröffentlichungstag der Anmeldung: 01.02.2012
(73) Patentinhaber: Johannes Franzen GmbH & Co. KG, 53894 Mechernich-Holzheim (DE)
(72) Erfinder: FRANZEN, Johannes, 53894 Mechernich-Holzheim (DE)
(74) Vertreter: Castell, Klaus
(86) Internationale Anmeldenummer: PCT/DE2010/000279
(87) Internationale Veröffentlichungsnummer: WO 2010/108470

(56) Entgegenhaltungen:
- WO-A1-88/09237
- WO-A1-03/022520
- CA-A1- 1 084 713
- DE-A1- 3 942 161
- US-A- 4 102 223
- US-A- 5 033 333

## Beschreibung

Die Erfindung betrifft eine Schärfvorrichtung für Motorsägeketten. Eine derartige Schärfvorrichtung ist beispielsweise aus der DE 39 42 161 A1 bekannt. Im Hinblick auf die vorliegende Anmeldung wird voll inhaltlich auf diese Offenlegungsschrift Bezug genommen. Sämtliche in dieser Offenlegungsschrift beschriebenen Merkmale sind optionale Merkmale auch bei der vorliegenden Schärfvorrichtung.

Es hat sich als vorteilhaft herausgestellt, eine Schärfvorrichtung aus einem Grundkörper aufzubauen, an dem eine Kettenklemmeinrichtung, ein Vorschubelement und eine Schleifscheibe angeordnet sind. Durch eine geeignete Positionierung von Schleifscheibe, Kettenklemmeinrichtung und Vorschubelement relativ zueinander kann ein optimaler Schliff an einer Motorsägekette erreicht werden. Hierzu wird die Schärfvorrichtung werksmäßig für das Schleifen einer bestimmten Motorsägekette hergerichtet. Durch die einstellbare Befestigung von Kettenklemmeinrichtung, Vorschubelement und Schleifscheibe kann eine ausgelieferte Schärfvorrichtung nachpositioniert werden oder sogar so umgebaut werden, dass sie auch für das Schleifen einer anderen Motorsägekette geeignet ist.

Eine derartige Schärfvorrichtung nach dem Oberbegriff des Anspruchs 1, ist in US4102223 offenbart.

Dem Vorteil der individuellen Einstellung von Schärfvorrichtungen steht jedoch der Nachteil entgegen, dass es schwierig ist, beim Schleifen unterschiedlicher Motorsägeketten die Schärfvorrichtung reproduzierbar und schnell immer wieder auf unterschiedliche Motorsägeketten einzustellen.

Insbesondere die Entwicklung besonders komplizierter Motorsägeketten mit unterschiedlichen Zähnen und unterschiedlichen Schliffwinkeln erfordert ein hohes Maß an Kenntnissen bei dem Bedienpersonal einer Schärfvorrichtung, das die Vorrichtung für einen optimalen Schliff einstellt.

Der Erfindung liegt daher die Aufgabe zugrunde, eine Schärfvorrichtung derart weiterzuentwickeln, dass sie sich leichter für unterschiedliche Motorsägeketten einstellen lässt.

Diese Aufgabe wird mit einer Schärfvorrichtung für Motorsägeketten mit den Merkmalen des Patentanspruchs 1 und einem Verfahren mit den Merkmalen des Patentanspruchs 13 gelöst.

Die Anordnung von Kettenklemmeinrichtung und Vorschubelement auf einer Grundplatte ermöglicht es, diese beiden Einrichtungen in ihrer optimalen Ausrichtung und genau aufeinander abgestimmt, individuell für eine spezielle Motorsägekette auf der Grundplatte zu fixieren. Das Bedienpersonal kann daher bei einem Wechsel von einer Motorsägekette auf eine andere einfach die Grundplatte mit darauf angeordneter Klemmeinrichtung und darauf fixiertem Vorschubelement austauschen, um schnell eine andere Motorsägekette zu schleifen. Eine genaue Ausrichtung von Klemmeinrichtung und Vorschubelement kann dabei entfallen, da beide Elemente bereits vorbereitet für eine spezielle Motorsägekette auf der Grundplatte angeordnet sind.

In der Praxis besorgt sich der Motorsägekettenschleifer eine Schärfvorrichtung mit einem Grundkörper, an dem die Schleifscheibe, der Antrieb und die Steuerung angeordnet sind. Die Schärfvorrichtung weist weiterhin eine Grundplatte mit Kettenklemmeinrichtung und Vorschubelement auf. Diese Grundplatte ist jedoch mit den darauf angeordneten Elementen austauschbar, sodass der Schleifer für jede nachzuschleifende Motorsägekette jeweils eine andere Grundplatte mit den darauf angeordneten Elementen an dem Grundkörper der Schärfvorrichtung anbringt.

Durch die Auslieferung derartiger Grundplatten mit darauf fixierten Elementen kann der Hersteller von Motorsägeketten davon ausgehen, dass seine Motorsägeketten immer genau, entsprechend einer präzisen Einstellung von Kettenklemmeinrichtung und Vorschubelement, geschliffen werden.

Vorteilhaft ist es, wenn an der Grundplatte eine Kettenumlenkung angeordnet ist. Dies erlaubt einen einfachen Aufbau und das Vorsehen spezieller Kettenumlenkungen für unterschiedliche Motorsägeketten.

Um sicherzustellen, dass die Kettenklemmeinrichtung in der richtigen Position relativ zur Grundplatte auf der Grundplatte angeordnet ist, wird vorgeschlagen, dass die Kettenklemmeinrichtung fix positioniert an der Grundplatte angeordnet ist. Hierzu können Stifte oder Rastelemente dienen, die eine oder mehrere fixe, vorgegebene Positionen erzwingen.

Entsprechendes gilt für das Vorschubelement, das ebenfalls vorzugsweise fix positioniert an der Grundplatte angeordnet ist.

Ein besonders bevorzugtes Ausführungsbeispiel sieht vor, dass an der Grundplatte ein Kabelbaum angeordnet ist. Der Kabelbaum ermöglicht es, sämtliche Kabel, die für auf der Grundplatte angeordnete Einrichtungen notwendig sind, gemeinsam zu führen und gemeinsam mit einem Grundkörper einer Schärfvorrichtung zu verbinden.

Die Kabel der Kettenklemmeinrichtung und des Vorschubelementes waren bisher üblicherweise angeschraubt oder mit den Einrichtungen und dem Grundkörper fest verbunden.

Um nun die Grundplatte mit Kettenklemmeinrichtung und Vorschubelement leicht vom Grundkörper abzunehmen wird vorgeschlagen, dass der Kabelbaum einen Stecker aufweist. Dieser Stecker weist vorzugsweise elektrische und pneumatische Leitungen auf.

Somit wird ein großer Stecker vorgesehen, in dem vorzugsweise alle elektrischen und pneumatischen Leitungen zusammengefasst sind, die zwischen den Einrichtungen auf der Grundplatte und dem Grundkörper geführt werden müssen. In der Praxis muss daher nur noch die Grundplatte am Grundkörper befestigt werden und der an der Grundplatte vorgesehene Stecker wird in eine am Grundkörper vorgesehene Buchse gesteckt. Verständlicherweise kann auch am Grundkörper der Stecker und an der Leitung die Buchse vorgesehen sein.

Für einen einfachen Aufbau der Schärfvorrichtung wird vorgeschlagen, dass die Grundplatte an einem Grundkörper befestigt ist, der eine Schleifscheibe und einen Antrieb aufweist. Schleifscheibe und Antrieb können auf herkömmliche Art und Weise am Grundkörper angeordnet sein und eine definierte Bewegung der Schleifscheibe bewirken. Diese Bewegung kann in der Regel unverändert beibehalten bleiben, auch wenn unterschiedliche Grundplatten für unterschiedliche Motorsägeketten verwendet werden.

Der Grundkörper weist eine Steuerung aufweist. Diese Steuerung kann zum einen dafür dienen, die Schleifscheibe zu führen und zum anderen kann die Steuerung auch die Kettenklemmeinrichtung und das Vorschubelement ansteuern. Ein spezielles, sich relativ zur Kettenklemmeinrichtung bewegendes Vorschubelement ist beispielsweise aus der DE 39 42 161 bekannt.

Für verschiedene Grundplatten müsste die Steuerung verschiedene Steuerprogramme aufweisen. Daher wird vorgeschlagen, dass die Steuerung einen Speicher mit verschiedenen Steuerungsprogrammen aufweist. Dies ermöglicht es, je nach aufgesetzter Grundplatte unterschiedliche Steuerungsprogramme ablaufen zu lassen.

Es wird daher vorgeschlagen, dass die Steuerung einen Schalter aufweist, der beim Aufbringen unterschiedlicher Grundplatten am Grundkörper unterschiedliche Schaltzustände hat. Beim Aufbringen der Grundplatte am Grundkörper können somit, beispielsweise durch an der Grundplatte an unterschiedlichen Positionen befestigte Stifte, je nach angebrachter Grundplatte, unterschiedliche Programme ausgelöst werden. Es kann jedoch auch ein optisches Signal auf der Grundplatte durch eine entsprechende Einrichtung am Grundkörper ausgelesen werden. Dadurch kann beim Aufbringen der Grundplatte ohne weitere mechanische Einstellungen automatisch ein spezielles Programm, das auf die Grundplatte abgestimmt ist, in der Steuerung angesprochen werden.

Der Schalter kann auch über den Stecker realisiert werden, der die Grundplatte mit dem Grundkörper verbindet. In diesem Fall wird die Information über die Schaltzustände über die Anzahl und/oder Belegung der elektrischen und/oder pneumatischen Elemente des Steckers übermittelt. Dadurch wird bereits beim Aufstecken des Steckers an den Grundkörper eine Information über die individuelle Gestaltung der Grundplatte mitgeteilt. Diese Information dient zur Bereitstellung und Initialisierung eines individuell auf die spezielle Grundplatte abgestimmten Schärfprogramms.

Um auf einfache Art und Weise die Steuersignale der Steuerung zu den Einrichtungen auf der Grundplatte weiterzuleiten, wird vorgesehen, dass die Steuerung eine Pneumatik aufweist.

Um die Kabel des Kabelbaumes leicht mit dem Grundkörper zu verbinden wird vorgeschlagen, dass der Grundkörper einen Steckanschluss für einen Stecker eines Kabelbaumes aufweist.

Die Grundplatte kann so ausgeführt sein, dass sie nur in einer speziellen vorgegebenen Position am Grundkörper befestigbar ist. Es hat sich jedoch herausgestellt, dass es vorteilhaft ist, wenn die Grundplatte schwenkbar und fixierbar am Grundkörper befestigt ist. Dies erlaubt es, die Grundplatte zunächst um eine Achse drehbar an einem speziellen Ort zu befestigen, anschließend die Schwenkposition nach vorgegebenen Einstellungsvorgaben einzustellen und dann die Grundplatte am Grundkörper zu fixieren. Ein einfaches Ausführungsbeispiel hierfür sieht vor, dass die Grundplatte mit einem Stift in vorgegebenen Schwenkwinkeln fixierbar ist.

Ein Ausführungsbeispiel von einer derartigen Grundplatte ist in der Zeichnung dargestellt.

Es zeigt:
- Figur 1: schematisch eine Schärfvorrichtung ohne Grundkörper,
- Figur 2: eine Vorderansicht der Grundplatte,
- Figur 3: einen Schnitt durch die in Figur 2 gezeigte Grundplatte längs der Linie AA,
- Figur 4: einen Schnitt durch die in Figur 2 gezeigte Grundplatte längs der Linie BB,
- Figur 5: eine Ansicht einer ersten Klemmbacke,
- Figur 6: einen Seitenansicht der ersten Klemmbacke,
- Figur 7: eine Ansicht einer zweiten Klemmbacke,
- Figur 8: eine Seitenansicht der zweiten Klemmbacke,
- Figur 9: eine Ansicht einer Umlenkrolle,
- Figur 10: eine Seitenansicht der in Figur 9 gezeigten Umlenkrolle,
- Figur 11: eine Ansicht einer Halteeinrichtung für das Vorschubelement,
- Figur 12: eine Seitenansicht der in Figur 11 gezeigten Halteeinrichtung und
- Figur 13: eine Draufsicht auf die in Figur 11 gezeigte Halteeinrichtung.

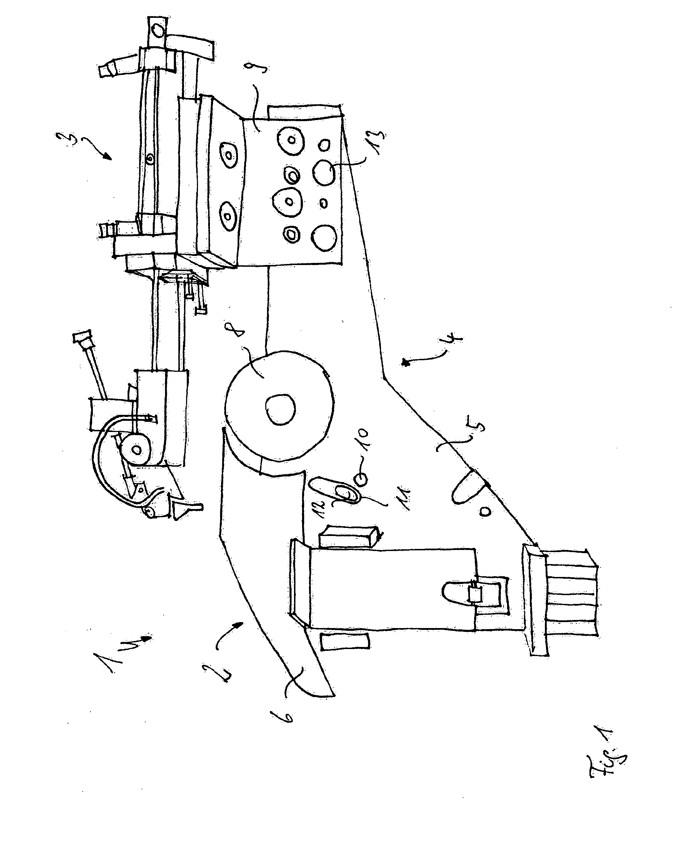

Die in Figur 1 gezeigte Schärfeinrichtung 1 besteht im Wesentlichen aus einer Klemmeinrichtung 2 und einem Vorschubelement 3, die auf der Grundplatte 4 angeordnet sind.

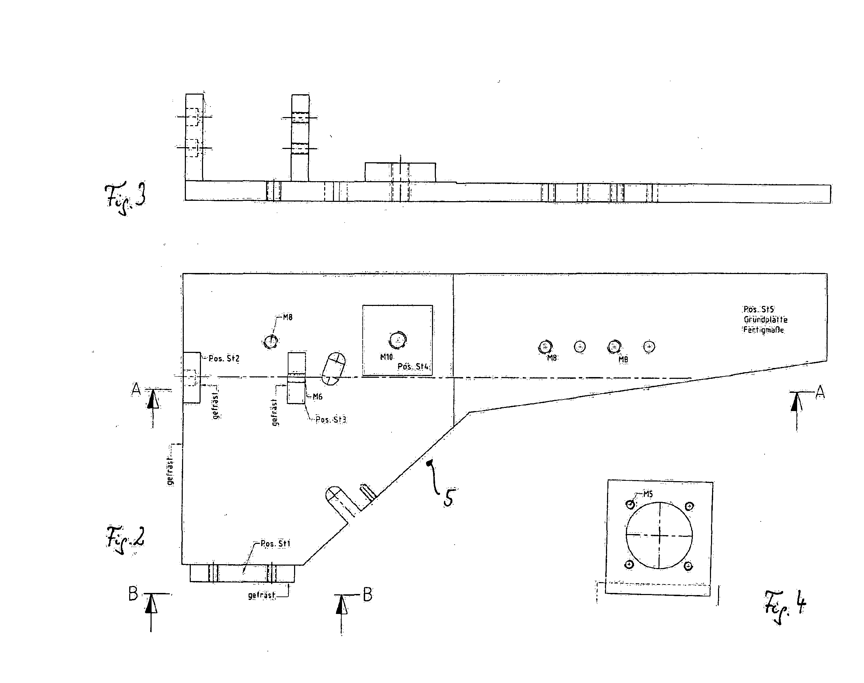

Die genauere Ausbildung der Grundplatte mit den daran angeordneten Einrichtungen zum Halten der Kettenklemmeinrichtung 2 und des Vorschubelementes 3 ist den Figuren 2 bis 13 zu entnehmen.

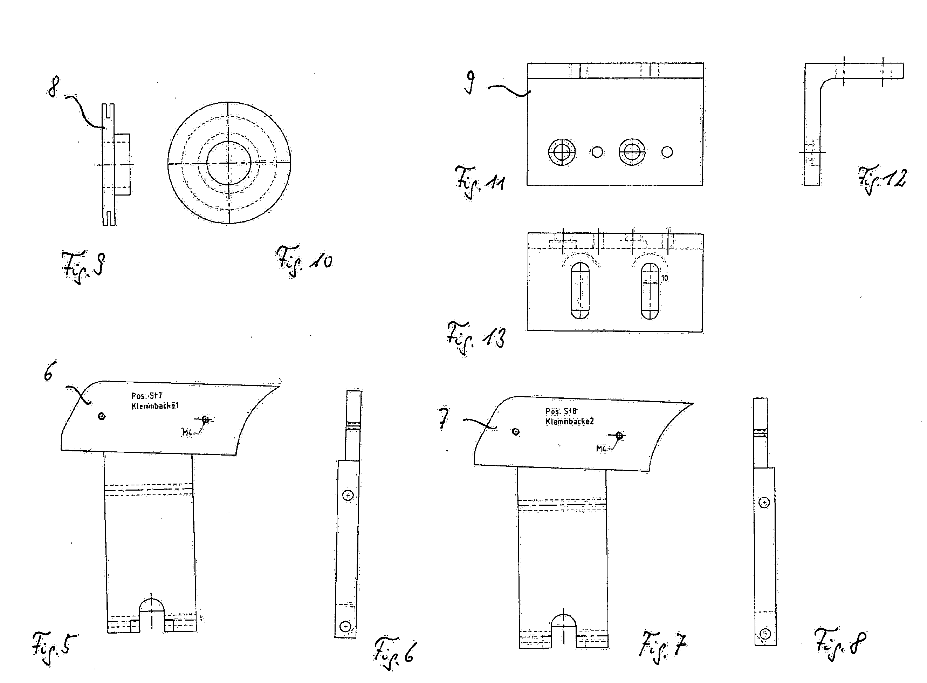

Hierbei zeigen die Figuren 2 bis 4 den Grundplattenkörper 5, an dem zwei in den Figuren 5 bis 8 gezeigte Klemmbacken 6 und 7 befestigt sind. Die Klemmbacken dienen dazu als Kettenklemmeinrichtung 2 die Kette einer Motorsäge zu halten. Die Motorsägenkette (nicht gezeigt) wird hierbei um eine Umlenkrolle 8 umgelenkt, die in den Figuren 9 und 10 genauer dargestellt ist.

Das Vorschubelement 3 ist auf einer Halteeinrichtung 9 angeordnet, die in den Figuren 11 bis 13 gezeigt ist.

Bei der Verwendung der Schärfvorrichtung wird an einem bekannten Grundkörper einer Motorsägekettenschleifmaschine die Halteplatte 4 zunächst um den Punkt 10 drehbeweglich angeordnet. Hierbei wird die Drehbeweglichkeit der Halteplatte 4 relativ zum Grundkörper (nicht gezeigt) durch einen in einem Langloch 11 geführten Stift 12 begrenzt. Durch einen weiteren Stift, der sich durch eine Bohrung 13 in eine Bohrung im Grundkörper erstreckt, wird die Grundplatte in ihrer Winkelausrichtung relativ zum Grundkörper fixiert.

Dies ermöglicht es, mit den Klemmbacken 6 und 7 als Klemmeinrichtung 2 eine Motorsägekette positioniert zu halten und mit dem an der Halteeinrichtung 9 befestigten Vorschubelement 3 für einen definierten Vorschub zu sorgen.

Die in der Figur 1 gezeigte Anordnung zeigt deutlich, dass die gesamte Einheit aus Grundplatte 4, Klemmeinrichtung 2 und Vorschubelement 3 leicht von einem Grundkörper entfernt und dadurch ausgetauscht werden kann.

Beim Austausch müssen auch die elektrischen und gegebenenfalls pneumatischen Verbindungen gelöst werden und daher ist an der in Figur 1 gezeigten Anordnung ein Kabelbaum (nicht gezeigt) vorgesehen, der es ermöglicht, mit einer einfachen Steckverbindung die Anordnung mit dem Grundkörper der Schärfvorrichtung zu verbinden.

## Patentansprüche

1. Schärfvorrichtung (1) für Motorsägeketten mit einer Kettenklemmeinrichtung (2) und einem Vorschubelement (3) zum Vorschub der Sägekette, wobei die Schärfvorrichtung eine Grundplatte (4) aufweist, an der jeweils die Kettenklemmeinrichtung (2) und das Vorschubelement (3) angeordnet sind, ***dadurch kennzeichnet, dass*** die Grundplatte (4) an einem Grundkörper (5) befestigt ist, der eine Schleifscheibe und einen Antrieb aufweist, wobei der Grundkörper (5) eine Steuerung aufweist, die einen Speicher mit verschiedenen Steuerungsprogrammen aufweist, und die Steuerung einen Schalter aufweist, der beim Aufbringen unterschiedlicher Grundplatten am Grundkörper unterschiedliche Schaltzustände hat, oder einen Stecker, der die Grundplatte mit dem Grundkörper verbindet und beim Aufstecken des Steckers an den Grundkörper eine Information über die individuelle Gestaltung der Grundplatte der Steuerung mitteilt.

2. Schärfvorrichtung nach Anspruch 1, ***dadurch gekennzeichnet, dass*** an der Grundplatte (4) eine Kettenumlenkung (8) angeordnet ist.

3. Schärfvorrichtung nach Anspruch 1 oder 2, ***dadurch gekennzeichnet, dass*** die Kettenklemmeinrichtung (2) fix positioniert an der Grundplatte (4) angeordnet ist.

4. Schärfvorrichtung nach einem der vorhergehenden Ansprüche, ***dadurch gekennzeichnet, dass*** das Vorschubelement (3) fix positioniert an der Grundplatte (4) angeordnet ist.

5. Schärfvorrichtung nach einem der vorhergehenden Ansprüche, ***dadurch gekennzeichnet, dass*** an der Grundplatte (4) ein Kabelbaum angeordnet ist.

6. Schärfvorrichtung nach Anspruch 5, ***dadurch gekennzeichnet, dass*** der Kabelbaum einen Stecker aufweist.

7. Schärfvorrichtung nach Anspruch 6, ***dadurch gekennzeichnet, dass*** der Stecker elektrische und pneumatische Leitungen aufweist.

8. Schärfvorrichtung nach einem der vorhergehenden Ansprüche, ***dadurch gekennzeichnet, dass*** sie mehrere austauschbare Grundplatten (4) aufweist, an denen jeweils die Kettenklemmeinrichtung (2) und das Vorschubelement (3) angeordnet sind.

9. Schärfvorrichtung nach einem der vorhergehenden Ansprüche, ***dadurch gekennzeichnet, dass*** die Steuerung eine Pneumatik aufweist.

10. Schärfvorrichtung nach einem der vorhergehenden Ansprüche, ***dadurch gekennzeichnet, dass*** der Grundkörper einen Steckanschluss für einen Stecker eines Kabelbaumes aufweist.

11. Schärfvorrichtung nach einem der vorhergehenden Ansprüche, ***dadurch gekennzeichnet, dass*** die Grundplatte (4) schwenkbar und fixierbar am Grundkörper befestigt ist.

12. Schärfvorrichtung nach einem der vorhergehenden Ansprüche, ***dadurch gekennzeichnet, dass*** die Grundplatte mit einem Stift in vorgegebenen Schwenkwinkeln fixierbar ist.

13. Verwendung einer Schärfvorrichtung (1) für Motorsägeketten mit einer Kettenklemmeinrichtung (2) und einem Vorschubelement (3) zum Vorschub der Sägekette, wobei die Schärfvorrichtung mehrere austauschbare Grundplatten (4) aufweist, an denen jeweils eine Kettenklemmeinrichtung (2) und ein Vorschubelement (3) angeordnet sind, zum Schleifen unterschiedlicher Motorsägeketten, indem Kettenklemmeinrichtung (2) und Vorschubelement (3) jeweils unterschiedlich in ihrer optimalen Ausrichtung und genau aufeinander abgestimmt, individuell für eine spezielle Motorsägekette auf den austauschbaren Grundplatten fixiert werden.

## Claims

1. A sharpening device (1) for power chain saws, having a chain clamping unit (2) and an advance element (3) for advancing the saw chain, wherein the sharpening device has a base plate (4) on which each of the chain clamping unit (2) and the advance element (3) are arranged, **characterized in that** base plate (4) is secured on a base body (5) which has a grinding wheel and a drive, wherein the base body (5) has a controller which has a memory with different control programs, and the controller has a switch which has different switching states when placing different base plates on the base body, or a plug which connects the base plate to the base body and which, upon plugging the plug on the base body, communicates information on the individual configuration of the base plate to the controller.

2. The sharpening device according to claim 1, **characterized in that** a chain deflector (8) is arranged on the base plate (4).

3. The sharpening device according to claim 1 or claim 2, **characterized in that** the chain clamping unit (2) is arranged fixed in position on the base plate (4).

4. The sharpening device according to any one of the preceding claims, **characterized in that** the advance element (3) is arranged fixed in position on the base plate (4).

5. The sharpening device according to any one of the preceding claims, **characterized in that** a harness is arranged on the base plate (4).

6. The sharpening device according to claim 5, **characterized in that** the harness has a plug.

7. The sharpening device according to claim 6, **characterized in that** the plug has electrical and pneumatic lines.

8. The sharpening device according to any one of the preceding claims, **characterized in that** the sharpening device has a plurality of exchangeable base plates (4), on each of which the chain clamping unit (2) and the advance element (3) are arranged.

9. The sharpening device according to any one of the preceding claims, **characterized in that** the controller has a pneumatic system.

10. The sharpening device according to any one of the preceding claims, **characterized in that** the base body has a plug connection for a plug of a harness.

11. The sharpening device according to any one of the preceding claims, **characterized in that** the base plate (4) is secured on the base body in a pivotable and fixable manner.

12. The sharpening device according to any one of the preceding claims, **characterized in that** the base plate can be fixed at predetermined pivoting angles by means of a pin.

13. A use of a sharpening device (1) for power chain saws, having a chain clamping unit (2) and an advance element (3) for advancing the saw chain, wherein the sharpening device has a plurality of exchangeable base plates (4) on each of which a chain clamping unit (2) and an advance element (3) are arranged for grinding different power saw chains by fixing each of the chain clamping unit (2) and the advance element (3) on the exchangeable base plates in such a manner that they are precisely adapted to one another and are adapted differently and individually in their optimal alignment for a particular power saw chain.

## Revendications

1. Dispositif d'affûtage (1) pour chaînes de tronçonneuses, comprenant un dispositif de serrage de chaîne (2) et un élément d'avancement (3) pour faire avancer la chaîne de tronçonneuse, sachant que le dispositif d'affûtage présente un plateau de base (4), sur lequel le dispositif de serrage de chaîne (2) et l'élément d'avancement (3) sont respectivement disposés, **caractérisé en ce que** le plateau de base (4) est fixé sur un corps de base (5) qui présente une meule et un entraînement, sachant que le corps de base (5) présente une commande qui présente une mémoire avec différents programmes de commande, et la commande présente un commutateur qui présente différents état de commutation lors de la pose de différents plateaux de base sur le corps de base, ou une prise mâle qui relie le plateau de base au corps de base et, lors de l'enfichage de la prise mâle sur le corps de base, transmet à la commande une information sur la conformation individuelle du plateau de base.

2. Dispositif d'affûtage selon la revendication 1, **caractérisé en ce qu'**un renvoi de chaîne (8) est disposé sur le plateau de base (4).

3. Dispositif d'affûtage selon la revendication 1 ou 2, **caractérisé en ce que** le dispositif de serrage de chaîne (2) est disposé en étant positionné fixement sur le plateau de base (4).

4. Dispositif d'affûtage selon l'une des revendications précédentes, **caractérisé en ce que** l'élément d'avancement (3) est disposé en étant positionné fixement sur le plateau de base (4).

5. Dispositif d'affûtage selon l'une des revendications précédentes, **caractérisé en ce qu'**un faisceau de câbles est disposé sur le plateau de base (4).

6. Dispositif d'affûtage selon la revendication 5, **caractérisé en ce que** le faisceau de câbles présente une fiche mâle.

7. Dispositif d'affûtage selon la revendication 6, **caractérisé en ce que** la fiche mâle présente des lignes électriques et pneumatiques.

8. Dispositif d'affûtage selon l'une des revendications précédentes, **caractérisé en ce qu'**il présente plusieurs plateaux de base (4) interchangeables sur lesquels le dispositif de serrage de chaîne (2) et l'élément d'avancement (3) respectivement sont disposés.

9. Dispositif d'affûtage selon l'une des revendications précédentes, **caractérisé en ce que** la commande présente un pneumatique.

10. Dispositif d'affûtage selon l'une des revendications précédentes, **caractérisé en ce que** le corps de base présente une prise embrochable pour une prise mâle du faisceau de câbles.

11. Dispositif d'affûtage selon l'une des revendications précédentes, **caractérisé en ce que** le plateau de base (4) est fixé sur le corps de base de façon à pouvoir pivoter et être fixé.

12. Dispositif d'affûtage selon l'une des revendications précédentes, **caractérisé en ce que** le plateau de base peut être fixé avec une tige dans des angles de pivotement prédéfinis.

13. Emploi d'un dispositif d'affûtage (1) pour chaînes de tronçonneuses, comprenant un dispositif de serrage de chaîne (2) et un élément d'avancement (3) pour faire avancer la chaîne à tronçonneuse, sachant que le dispositif d'affûtage présente plusieurs plateaux de base (4) interchangeables, sur lesquels un dispositif de serrage de chaîne (2) et un élément d'avancement (3) respectivement sont disposés, pour affûter différentes chaînes de tronçonneuses, en ce que le dispositif de serrage de chaîne (2) et l'élément d'avancement (3) sont fixés individuellement pour une chaîne de tronçonneuse sur les plateaux de base interchangeables, respectivement de façon différente dans leur alignement optimal et de façon coordonnée précisément entre eux.
